(19) Europäisches Patentamt
European Patent Office
Office européen des brevets

(11) EP 2 029 260 B2

(12) NEUE EUROPÄISCHE PATENTSCHRIFT
Nach dem Einspruchsverfahren

(45) Veröffentlichungstag und Bekanntmachung des Hinweises auf die Entscheidung über den Einspruch:
06.03.2019 Patentblatt 2019/10

(45) Hinweis auf die Patenterteilung:
21.11.2012 Patentblatt 2012/47

(21) Anmeldenummer: 07724847.4

(22) Anmeldetag: 04.05.2007

(51) Int Cl.:
B01D 53/94 (2006.01)

(86) Internationale Anmeldenummer:
PCT/EP2007/003922

(87) Internationale Veröffentlichungsnummer:
WO 2007/137675 (06.12.2007 Gazette 2007/49)

(54) KATALYSATOR ZUR VERMINDERUNG STICKSTOFF-HALTIGER SCHADGASE AUS DEM ABGAS VON DIESELMOTOREN

CATALYST FOR REDUCING NITROGEN-CONTAINING POLLUTANTS FROM THE EXHAUST GASES OF DIESEL ENGINES

CATALYSEUR DESTINÉ À RÉDUIRE LES POLLUANTS CONTENANT DE L'AZOTE DANS DES GAZ D'ÉCHAPPEMENT DE MOTEURS DIESEL

(84) Benannte Vertragsstaaten:
AT BE BG CH CY CZ DE DK EE ES FI FR GB GR HU IE IS IT LI LT LU LV MC MT NL PL PT RO SE SI SK TR

(30) Priorität: 31.05.2006 EP 06011149
31.05.2006 EP 06011148

(43) Veröffentlichungstag der Anmeldung:
04.03.2009 Patentblatt 2009/10

(73) Patentinhaber: Umicore AG & Co. KG
63457 Hanau-Wolfgang (DE)

(72) Erfinder:
• SOEGER, Nicola
61130 Nidderau (DE)
• SCHNEIDER, Wolfgang
63517 Rodenbach (DE)
• DEMEL, Yvonne
63674 Altenstadt (DE)
• MUSSMANN, Lothar
63069 Offenbach (DE)
• SESSELMANN, Ralf
63691 Ranstadt (DE)
• KREUZER, Thomas
65191 Wiesbaden (DE)

(56) Entgegenhaltungen:
EP-A- 1 264 628        EP-A- 1 685 891
EP-A1- 0 773 057       EP-A1- 1 685 891
EP-A1- 1 736 232       EP-A1- 1 875 954
EP-A1- 1 961 933       EP-A2- 0 559 021
WO-A1-00/72965         WO-A1-99/55446

WO-A1-2005/044426      WO-A1-2005/082494
WO-A1-2006/198849      JP-A- 1 127 044
JP-A- 6 190 282        JP-A- 2005 238 195
US-A- 5 120 695        US-A- 5 354 720

• BRISCOE N.A. ET AL: 'Some Aspects of the Synthesis, Characterisation and Properties of Zeolite Nu-2' STUDIES IN SURFACE SCIENCE AND CATALYSIS vol. 49, 1989, pages 151 - 160 DOI: https://doi.org/10.1016/S0167-2991(08)61714 -0
• MOSHFIQUR RAHMAN ET AL: 'Measurement of Brönsted Acidity of Silica- Alumina Solid Catalyst by Base Exchange Method' JOURNAL OF SURFACE SCIENCE AND TECHNOLOGY vol. 22, no. 1-2, 2006, pages 25 - 33
• CLAUDIO MORTERRA ET AL: 'On the strength of Lewis- and Brønsted-acid sites at the surface of sulfated zirconia catalysts' J. CHEM. SOC., FARADAY TRANS., vol. 93, no. 6, 1997, pages 1179 - 1184 DOI: 10.1039/A606608I
• PARFITT G.D.: 'SURFACE CHEMISTRY OF OXIDES' PURE & APPL. CHEM. vol. 48, 1976, pages 415 - 418
• HECK R.M ET AL: 'Catalytic Air Pollution Control Commercial Technology, Second Edtion', 2002, JOHN WILEY & SONS, INC., deel 'Ch. 3 and 12', pages 216 - 218; 310-318, XP055479537

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft die Entfernung von Stickstoff-haltigen Schadgasen aus dem Abgas von mit einem mageren Luft/Kraftstoff-Gemisch betriebenen Verbrennungs-motoren (sog. "Magermotoren"), nämlich aus dem Abgas von Dieselmotoren.

Die im Abgas eines Kraftfahrzeugs, das mit einem Magermotor betrieben wird, enthaltenen Emissionen können in zwei Gruppen unterschieden werden. So bezeichnet der Begriff Primäremissionen Schadgase, die durch den Verbrennungsprozeß des Kraftstoffes im Motor direkt entstehen und bereits vor dem Passieren von Abgasreinigungseinrichtungen in der sogenannten Rohemission vorhanden sind. Als Sekundäremissionen werden solche Schadgase bezeichnet, die als Nebenprodukte in der Abgasreinigungsanlage entstehen können.

Das Abgas von Magermotoren enthält neben den üblichen Primäremissionen Kohlenmonoxid CO, Kohlenwasserstoffe HC und Stickoxide NOx einen relativ hohen Sauerstoffgehalt von bis zu 15 Vol.-%. Kohlenmonoxid und Kohlenwasserstoffe können durch Oxidation leicht unschädlich gemacht werden. Die Reduktion der Stickoxide zu Stickstoff ist wegen des hohen Sauerstoffgehaltes jedoch wesentlich schwieriger.

Ein bekanntes Verfahren zur Entfernung von Stickoxiden aus Abgasen in Gegenwart von Sauerstoff ist das Verfahren der selektiven katalytischen Reduktion (SCR-Verfahren; Selective Catalytic Reduction) mittels Ammoniak an einem geeigneten Katalysator, kurz als SCR-Katalysator bezeichnet.

Dabei wird, je nach Motorenkonzeption und Aufbau der Abgasanlage zwischen "aktiven" und "passiven" SCR-Verfahren unterschieden, wobei bei "passiven" SCR-Verfahren in der Abgasanlage gezielt generierte Ammoniak-Sekundäremissionen als Reduktionsmittel zur Entstickung genutzt werden.

So beschreibt die US 6,345,496 B1 ein Verfahren zur Reinigung von Motorenabgasen, worin wiederholt alternierend magere und fette Luft/Kraftstoff-Verhältnisse eingestellt werden und das so erzeugte Abgas durch eine Abgasanlage geleitet wird, die anströmseitig einen Katalysator enthält, der nur unter fetten Abgasbedingungen $NO_x$ zu $NH_3$ umsetzt, während abströmseitig ein weiterer Katalysator angeordnet ist, der im Mageren $NO_x$ adsorbiert oder einspeichert, dieses im Fetten freisetzt, so daß es mit vom anströmseitigen Katalysator erzeugten $NH_3$ zu Stickstoff reagieren kann. Als Alternative kann gemäß der US 6,345,496 B1 abströmseitig ein $NH_3$-Adsorptions- und Oxidationskatalysator angeordnet sein, der im Fetten $NH_3$ einspeichert, dieses im Mageren desorbiert und mit Stickoxiden oder Sauerstoff zu Stickstoff und Wasser oxidiert.

Auch in der WO 2005/064130 wird eine Abgasanlage offenbart, die einen ersten anströmseitig angeordneten Katalysator enthält, der während der Fettphase aus Abgasbestandteilen $NH_3$ erzeugt. In einem zweiten nachgeordeneten Katalysator wird zeitweise $NH_3$ eingespeichert. Die in der Magerphase im Abgas enthaltenen Stickoxide werden mit dem gespeicherten Ammoniak umgesetzt. Die Abgasanlage enthält darüber hinaus einen dritten Edelmetall-haltigen Katalysator, der mindestens Platin, Palladium oder Rhodium auf Trägermaterialien enthält, wobei die Trägermaterialien in der Lage sind, in der Fettphase Ammoniak einzuspeichern und diesen in der Magerphase wieder zu desorbieren.

In der WO 2005/099873 A1 wird ein Verfahren zur Entferung von Stickoxiden aus dem Abgas von Magermotoren im zyklischen Fett/Mager-Betrieb beansprucht, das sich aus den Teilschritten $NO_x$-Speicherung in einer $NO_x$-Speicherkomponente im mageren Abgas, in-situ-Konversion von gespeichertem $NO_x$ zu $NH_3$ im fetten Abgas, Speicherung von $NH_3$ in mindestens einer $NH_3$-Speicherkomponente und Umsetzung von $NH_3$ mit $NO_x$ unter mageren Abgasbedingungen zusammensetzt, wobei die erste und letzte Teilreaktion mindestens zeitweise und/oder teilweise simultan und/oder parallel ablaufen. Zur Durchführung des Verfahrens wird ein integriertes Katalysatorsystem beansprucht, das mindestens eine $NO_x$-Speicherkomponente, eine $NH_3$-Erzeugungskomponente, eine $NH_3$-Speicherkomponente und eine SCR-Komponente enthält.

Die Anwendung solcher "passiver" SCR-Verfahren ist beschränkt auf Fahrzeuge, bei denen die motorische Erzeugung reduzierender ("fetter") Abgasbedingungen , ohne größeren Aufwand möglich ist. Dies trifft auf direkteinspritzende Benzinmotoren zu.

Dieselmotoren lassen sich dagegen nicht ohne weiteres mit einem unterstöchiometrischen ("fetten") Luft/Kraftstoff-Gemisch betreiben. Die Erzeugung reduzierender Abgasbedingungen muß über nicht motorische Maßnahmen wie die Nacheinspritzung von Kraftstoff in den Abgasstrang erfolgen. Dies führt zu Problemen bei der Einhaltung der HC-Abgasgrenzwerte, zu Exothermien in nachgeschalteten Oxidationskatalysatoren, deren vorzeitiger thermischer Alterung und nicht zuletzt zu einer deutlichen Erhöhung des Kraftstoffverbrauchs. Zur Entstickung des Abgases von Dieselmotoren stehen daher "aktive" SCR-Verfahren im Fokus von Entwicklung und Applikation.

In "aktiven" SCR-Verfahren wird das Reduktionsmittel aus einem mitgeführten Zusatztank mittels einer Einspritzdüse in den Abgasstrang eindosiert. Als solches kann anstelle von Ammoniak auch eine leicht zu Ammoniak zersetzliche Verbindung wie zum Beispiel Harnstoff verwendet werden. Ammoniak muß mindestens im stöchiometrischen Verhältnis zu den Stickoxiden dem Abgas zugeführt werden.

Durch eine 10 bis 20-prozentige Überdosierung des Ammoniaks kann der Umsatz der Stickoxide gewöhnlich verbessert werden, was jedoch das Risiko höherer Sekundäremissionen insbesondere durch verstärkten Ammoniak-Schlupf drastisch erhöht. Da es sich bei Ammoniak um ein schon in geringen Konzentrationen stechend riechendes Gas handelt, ist es in der Praxis Ziel, den Ammoniak-Schlupf zu minimieren. Das Molverhältnis von Ammoniak zu den Stickoxiden im Abgas wird gewöhnlich mit Alpha bezeichnet:

$$\alpha = \frac{c(NH_3)}{c(NOx)}$$

Bei Verbrennungsmotoren in Kraftfahrzeugen bereitet die genaue Dosierung des Ammoniaks wegen der stark schwankenden Betriebsbedingungen der Kraftfahrzeuge große Schwierigkeiten und führt teilweise zu erheblichen Ammoniak-Durchbrüchen nach SCR-Katalysator. Zur Unterdrückung des Ammoniak-Schlupfes wird gewöhnlich hinter dem SCR-Katalysator ein Oxidationskatalysator angeordnet, der durchbrechendes Ammoniak zu Stickstoff oxidieren soll. Ein solcher Katalysator wird im folgenden als Ammoniak-Sperrkatalysator bezeichnet. Als ein Maß für die Oxidationskraft des Katalysators wird die Ammoniak-Light-Off Temperatur $T_{50}(NH_3)$ angegeben. Sie gibt an, bei welcher Reaktionstemperatur der Ammoniak-Umsatz in der Oxidationsreaktion 50 % beträgt.

Ammoniak-Sperrkatalysatoren, die zur Oxidation von durchbrechendem Ammoniak hinter einem SCR-Katalysator angeordnet sind, sind in verschiedenen Ausführungsformen bekannt. So beschreibt die DE 3929297 C2 (US 5,120,695) eine solche Katalysatoranordnung. Gemäß dieser Schrift ist der Oxidationskatalysator als Beschichtung auf einem abströmseitigen Abschnitt des einstückigen als Vollextrudat in Wabenform ausgeführten Reduktionskatalysators aufgebracht, wobei der mit dem Oxidationskatalysator beschichtete Bereich 20 bis 50% des gesamten Katalysatorvolumens ausmacht. Der Oxidationskatalysator enthält als katalytisch aktive Komponenten wenigstens eines der Platingruppenmetalle Platin, Palladium und Rhodium, die auf Ceroxid, Zirkonoxid und Aluminiumoxid als Trägermaterialien abgeschieden sind.

Gemäß der EP 1 399 246 B1 können die Platingruppenmetalle auch direkt auf den Komponenten des Reduktionskatalysators als Trägermaterialien durch Imprägnieren mit löslichen Vorstufen der Platingruppenmetalle aufgebracht werden.

Gemäß JP2005-238199 kann die Edelmetall-haltige Schicht eines Ammoniak-Oxidationskatalysators auch unter einer Beschichtung aus Titanoxid, Zirkonoxid, Siliziumoxid oder Aluminiumoxid und einem Übergangsmetall oder einem Selten-ErdMetall eingebracht werden.

EP 0 559 021 offenbart einen Katalysator zur Stickoxidverminderung im mageren Abgas von Kraftfahrzeugmotoren, der eine aus zwei Schichten bestehende katalytisch aktive Beschichtung auf einem Wabenkörper enthält. Die erste, direkt auf den Wabenkörper aufgebrachte Schicht enthält ein hochoberflächiges Aluminiumoxid und/oder Ceroxid imprägniert mit einer Mischung aus Iridium und Platin als katalytisch aktiven Edelmetallkomponenten. Sie ist oxidationskatalytisch aktiv. Die auf die erste Schicht aufgebrachte zweite Schicht enthält einen mit Kupfer und/oder Eisen ausgetauschten Zeolithen des Mordenit-Typs. Sie ist reduktionskatalytisch aktiv.

Der Einsatz von Ammoniak-Sperrkatalysatoren birgt insbesondere bei Verwendung von hochaktiven Oxidationskatalysatoren die Gefahr einer Überoxidation zu Stickoxiden. Dieser Vorgang verringert die über das Gesamtsystem aus SCR- und Sperrkatalysator erreichbaren Umsetzungsraten für Stickoxide. Die Selektivität des Ammoniak-Sperrkatalysators ist daher ein wichtiges Maß für dessen Güte. Die Selektivität zu Stickstoff im Sinne dieser Schrift ist eine Konzentrationsangabe und errechnet sich aus der Differenz aller gemessenen Stickstoffkomponenten zu der dosierten Menge Ammoniak.

$$c(N_2) = \frac{1}{2} \cdot [c_{dosiert}(NH_3) - c_{Ausgang}(NH_3) - 2 \cdot c_{Ausgang}(N_2O) - c_{Ausgang}(NO) - c_{Ausgang}(NO_2)]$$

Wird ein Ammoniak-Sperrkatalysator benötigt, so muß in der Abgasreinigungsanlage Platz für einen weiteren Katalysator zur Verfügung gestellt werden. Dabei kann der Ammoniak-Sperrkatalysator in einem zusätzlichen Konverter nach dem den SCR-Katalysator enthaltenen Konverter angeordnet sein. Solche Anordnungen sind jedoch nicht verbreitet, da der Bauraum für einen zusätzlichen Konverter im Fahrzeug in der Regel nicht verfügbar ist.

Alternativ kann der Ammoniak-Sperrkatalysator im gleichen Konverter wie der SCR-Katalysator angeordnet werden ("integrierter Ammoniak-Sperrkatalysator"). Dabei geht das für den Ammoniak-Sperrkatalysator benötigte Bauvolumen dem für den SCR-Katalysator verfügbaren Bauvolumen verloren.

Es können beispielsweise zwei verschiedene Katalysatoren in einem Konverter hintereinander angeordnet werden. Eine solche Anordnung ist in JP 2005-238195 beschrieben. In der dort gezeigten Ausführungsform nimmt der Ammoniak-Sperrkatalysator circa 40 % des Bauvolumens ein, wodurch dem SCR-Katalysator nur etwa 60 % des Bauvolumens zur Verfügung stehen. US 2004/0206069 zeigt eine Methode des Wärmemanagements für ein Dieselabgasreinigungssystem in Lastkraftwagen, wobei ein Konverter zur Verminderung von Stickoxiden durch selektive katalytische Reduktion Bestandteil des Dieselabgasreinigungssystems ist. Dieser Konverter enthält neben dem SCR-Hauptkatalysator einen vorgeschalteten Hydrolysekatalysator zur Freisetzung von Ammoniak aus Harnstoff und einen nachgeschalteten Ammoniak-Sperrkatalysator.

In einer anderen Ausführungsform des "integrierten Ammoniak-Sperrkatalysators" wird eine den Ammoniak-Sperrkatalysator enthaltende Beschichtung auf den stromabwärts gerichteten Teil des SCR-Katalysators aufgebracht. WO 02/100520 der Anmelderin beschreibt eine Ausführungsform, in der ein edelmetallbasierter Oxidationskatalysator auf einen in Form eines monolithischen Vollkatalysators vorliegenden SCR-Katalysator aufgebracht ist, wobei nur 1 - 20 % der Länge des SCR-Katalysators als Tragkörper für den Oxidationskatalysator genutzt werden.

Bei einem "aktiven" SCR-System zur Entfernung von Stickoxiden aus dem Abgas von Dieselmotoren besteht also einerseits das Problem, einen Katalysator und Bedingungen für eine wirksame Stickoxid-Entfernung durch selektive katalytische Reduktion zur Verfügung zu stellen. Andererseits darf gegebenenfalls nicht vollständig umgesetztes Ammoniak nicht in die Umwelt freigesetzt werden. Eine Abgasanlage, die dieses Problem löst, muß darüber hinaus so konzipiert sein, daß für die benötigten Katalysatoren einerseits möglichst wenig Bauraum benötigt wird, andererseits jedoch die Selektivität des Systems zu Stickstoff möglichst hoch ist.

Es ist Aufgabe der vorliegenden Erfindung, einen Katalysator und eine Methode zur Verfügung zu stellen, mit dessen Hilfe Stickstoffhaltige Schadgase mittels "aktivem" SCR-Verfahren aus dem vollständig mageren Abgas von Dieselmotoren entfernt werden können, wobei es unerheblich ist, ob Stickstoff in den Schadgasen in oxidierter Form, wie in Stickoxiden, oder in reduzierter Form, wie in Ammoniak, vorliegt.

Zur Lösung einer solchen Aufgabe schlägt die EP 0 773 057 A1 einen Katalysator vor, der einen mit Platin und Kupfer ausgetauschten Zeolithen (Pt-Cu-Zeolith) enthält. In einer besonderen Ausführungsform ist dieser Pt-Cu-Zeolith-Katalysator auf einem Standardsubstrat ("common substrate") aufgebracht. Darüber ist ein zweiter Katalysator angeordnet, der einen Zeolithen enthält, der nur mit Kupfer ausgetauscht ist.

Erfindungsgemäß wird die Aufgabe durch einen Katalysator gelöst, der einen Wabenkörper und eine aus zwei übereinander liegenden katalytisch aktiven Schichten bestehende Beschichtung enthält, wobei die direkt auf den Wabenkörper aufgebrachte, untere Schicht einen Oxidationskatalysator enthält, und die darauf aufgebrachte, obere Schicht einen oder mehrere mit Eisen ausgetauschte Zeolithe, die sich durch gute SCR-Aktivität auszeichnen, als Ammoniak-Speichermaterial enthält, welches über eine Ammoniak-Speicherkapazität von mindestens 20 Milliliter Ammoniak pro Gramm Katalysatormaterial verfügt.

Ammoniak-Speichermaterialien im Sinne dieser Schrift sind Verbindungen, die acide Zentren enthalten, an denen Ammoniak gebunden werden kann. Der Fachmann unterscheidet diese in Lewis-saure Zentren zur Physisorption von Ammoniak und Brönstedt-saure Zentren zur Chemisorption von Ammoniak. Ein Ammoniak-Speichermaterial in einem erfindungsgemäßen Ammoniak-Sperrkatalysator muß einen signifikanten Anteil Brönstedt-saurer Zentren und gegebenenfalls Lewis-saurer Zentren enthalten, um eine ausreichende Ammoniak-Speicherfähigkeit zu gewährleisten.

Wie hoch die Ammoniak-Speicherfähigkeit eines Katalysators ist, kann mit Hilfe der temperaturprogrammierten Desorption ermittelt werden. Bei dieser Standardmethode zur Charakterisierung heterogener Katalysatoren wird das zu charakterisierende Material nach Ausheizen von gegebenenfalls adsorbierten Komponenten wie beispielsweise Wasser mit einer definierten Menge Ammoniak-Gas beladen. Dies erfolgt bei Raumtemperatur. Dann wird die Probe unter Inertgas mit einer konstanten Heizrate aufgeheizt, so daß zuvor von der Probe aufgenommenes Ammoniak-Gas desorbiert wird und mit einer geeigneten Analytik quantitativ erfasst werden kann. Als Kenngröße für die Ammoniak-Speicherfähigkeit des Materials wird eine Ammoniakmenge in Milliliter pro Gramm Katalysatormaterial erhalten, wobei der Begriff "Katalysatormaterial" immer das zur Charakterisierung eingesetzte Material bezeichnet. Diese Kenngröße ist abhängig von der gewählten Aufheizrate. In dieser Schrift angegebene Werte beziehen sich immer auf Messungen mit einer Aufheizrate von 4 Kelvin pro Minute.

Der erfindungsgemäße Katalysator verfügt über die Fähigkeit, mindestens 20 Milliliter Ammoniak pro Gramm Katalysatormaterial in der oberen Schicht zu speichern. Es werden Ammoniak-Speichermaterialien mit einer Ammoniak-Speicherkapazität von 40 bis 70 Milliliter pro Gramm Ammoniak-Speichermaterial verwendet, wie sie für Eisen-ausgetauschte Zeolithe typisch ist. , Diese eingesetzten Eisen-ausgetauschten Zeolithe zeichnen sich nicht nur durch optimale Ammoniak-Speicherfähigkeit, sondern auch durch gute SCR-Aktivität aus. Durch Zusatz weiterer Komponenten wie zusätzlichen SCR-Katalysatoren, Stickoxid-Speichermaterialien oder hochtemperaturstabilen Oxiden zur Verbesserung der thermischen Stabilität kann eine ganz besonders bevorzugte Speicherkapazität der oberen Schicht von 25 bis 40 Milliliter Ammoniak pro Gramm Katalysatormaterial eingestellt werden, wobei unter "Katalysatormaterial" die Mischung aus Ammoniak-Speichermaterial und den weiteren Inhaltsstoffen zu verstehen ist.

Der erfindungsgemäße Katalysator enthält nur in der oberen Schicht signifikante Mengen Ammoniak-Speichermaterial. Die untere Schicht ist frei davon. Hierin liegt eine wesentliche Verbesserung gegenüber der in der EP 0 773 057 A1 vorgeschlagenen Lösung, die mit Pt-Cu-Zeolith in der unteren Schicht und Cu-Zeolith in der oberen Schicht Ammoniak-Speichermaterial über die gesamte Schichtdicke des Katalysators aufweist. In einer solchen Ausführungform ist, wie Experimente der Erfinder zeigen (vgl. Vergleichsbeispiel 3), die Gesamtmenge an Ammoniak-Speichermaterial im Katalysator so groß, daß bei Temperaturschwankungen im dynamischen Betrieb die Gefahr der unkontrollierten Desorption von Ammoniak besteht und es so überraschenderweise wiederum zu erhöhten Ammoniak-Durchbrüchen im dynamischen Betrieb kommt. Im Unterschied dazu wird mit der Reduzierung des Ammoniak-Speichermaterials auf die obere Schicht bei gleichzeitiger Limitierung der Menge auf die besonders bevorzugten Werte eine "Überbeladung" des Katalysators mit Ammoniak und somit die unkontrollierte Desorption vermieden.

Der erfindungsgemäße Katalysator enthält in seinen bevorzugten Ausführungsformen in der unteren Schicht einen Oxidationskatalysator mit starker Oxidationswirkung. Dabei handelt es sich um einen Oxidationskatatysator aus Platin oder Palladium oder Mischungen von Platin und Palladium auf einem Trägermaterial ausgewählt aus der Gruppe bestehend aus aktivem Aluminiumoxid, Zirkonoxid, Titanoxid, Siliziumdioxid und Mischungen oder Mischoxide davon.

Der erfindungsgemäße Katalysator kann bei entsprechender Dimensionierung einerseits als SCR-Katalysator eingesetzt werden, wobei dieser dann einen gegenüber konventionellen Katalysatoren verringerten Ammoniak-Schlupf aufweist. Zum anderen eignet sich der erfindungsgemäße Katalysator als sehr selektiver Ammoniak-Sperrkatalysator.

Der erfindungsgemäße Katalysator ist also je nach Dimensionierung einerseits in der Lage, Stickoxide (-also Schadgase mit Stickstoff in oxidierter Form-) zu reduzieren, als auch Ammoniak (-also Schadgase mit Stickstoff in reduzierter Form-) oxidativ zu eliminieren.

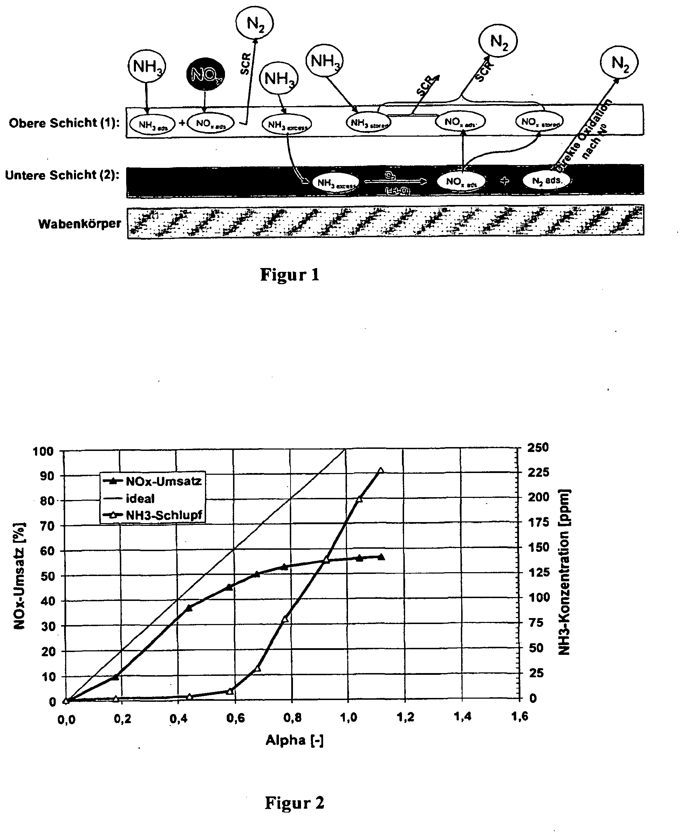

Diese Multifunktionalität beruht im Detail vermutlich auf folgendem Reaktionsablauf, der in Figur 1 schematisch dargestellt ist:

1) Stickoxide und Ammoniak aus dem Abgas werden auf der oben liegenden Schicht (1), welche eine SCR-aktive Beschichtung ist, adsorbiert und reagieren in einer selektiven katalytischen Reaktion zu Wasser und Stickstoff, die nach Reaktionsabschluß desorbieren. Dabei ist Ammoniak in überstöchiometrischer Menge vorhanden, liegt also im Überschuß vor.

2) Überschüssiger Ammoniak diffundiert in die oben liegende Schicht (1). Ammoniak wird dort teilweise eingespeichert.

3) Nicht gespeichertes Ammoniak gelangt durch die obere Beschichtung (1) hindurch zur darunter liegenden Schicht (2), die sich durch kräftige Oxidationswirkung auszeichnet. Hier werden Stickstoff und Stickoxide erzeugt. Der entstandene Stickstoff diffundiert unverändert durch die obere Schicht (1) hindurch und gelangt in die Atmosphäre.

4) Bevor die in der unteren Schicht (2) gebildeten Stickoxide das System verlassen, passieren sie erneut die über der Oxidationsschicht liegende Beschichtung (1). Hier werden sie mit zuvor eingespeichertem Ammoniak $NH_{3\_stored}$ in einer SCR-Reaktion zu $N_2$ umgesetzt.

Gelangt Edelmetall aus der unteren Schicht über Diffusionsprozesse in die obere Katalysatorschicht, so führt dies zu einer Reduzierung der Selektivität der selektiven katalytischen Reduktion, da die Reaktion dann nicht mehr als Komproportionierung zu Stickstoff verläuft, sondern als Oxidation zu einem niedervalenten Stickoxid wie beispielsweise $N_2O$. Entsprechende Edelmetalldiffusionsprozesse finden typischerweise erst bei höheren Temperaturen statt.

Daher eignet sich der erfindungsgemäße Katalysator bei entsprechender Dimensionierung hervorragend für den Einsatz als SCR-Katalysator mit verringertem Ammoniak-Schlupf bei Temperaturen im Bereich 150°C bis 400°C, besonders bevorzugt 200°C bis 350°C. Solche Temperaturen treten in Abgasreinigungsanlagen in Fahrzeugen mit Dieselmotor typischerweise in Konvertern auf, die in Unterbodenpositionen am Ende des Abgasstranges angeordnet sind. Wird in einer entsprechenden Abgasanlage am Ende des Abgasstranges in einem Unterbodenkonverter ein erfindungsgemäßer Katalysator mit hinreichendem Volumen eingebaut, so können die durch den Dieselmotor erzeugten Stickoxide effektiv und unter Vermeidung einer hohen Ammoniak-Sekundäremission entfernt werden.

In einem entsprechenden Verfahren zur Verminderung der Stickstoff-haltigen Schadgase wird vor dem in Unterbodenposition angeordneten, erfindungsgemäßen Katalysator Ammoniak oder eine zu Ammoniak zersetzliche Verbindung in den Abgasstrang eindosiert. Auf den Einsatz eines zusätzlichen Ammoniak-Sperrkatalysators kann in einem solchen Verfahren in der Regel verzichtet werden.

Der erfindungsgemäße Katalysator kann außerdem in Kombination mit einem herkömmlichen SCR-Katalysator als äußerst effektiver Ammoniak-Sperrkatalysator eingesetzt werden. Dabei ist der Einsatz von SCR-Katalysatoren bevorzugt, die einen mit Kupfer oder Eisen ausgetauschten Zeolithen oder einen mit Kupfer und Eisen ausgetauschten Zeolithen oder Mischungen davon enthalten. Weiterhin können SCR-Katalysatoren verwendet werden, die Vanadiumoxid oder Wolframoxid oder Molybdänoxid auf einem Trägermaterial aus Titanoxid enthalten. Verschiedene Ausgestaltungen der Abgasanlage sind denkbar.

So können SCR- Katalysator und erfindungsgemäßer Ammoniak-Sperrkatalysator jeweils in Form einer Beschichtung auf einem inerten Wabenkörper vorliegen, wobei beide Wabenkörper aus einem inerten Material bestehen, bevorzugt aus Keramik oder Metall. Die beiden Wabenkörper können in zwei hintereinander liegenden Konvertern oder in einem gemeinsamen Konverter vorliegen, wobei der Ammoniak-Sperrkatalysator immer abströmseitig zum SCR-Katalysator angeordnet ist. Bei der Anordnung in einem Konverter nimmt das Volumen des Ammoniak-Sperrkatalysators typischerweise 5 - 40 % des im Konverter zur Verfügung stehenden Bauraums ein. Das restliche Volumen wird durch den SCR-Katalysator oder durch den SCR-Katalysator und einen gegebenenfalls vorhandenen anströmseitig angeordneten Hydrolysekatalysator ausgefüllt. Ferner kann vor dem SCR-Katalysator ein Oxidationskatalysator angeordnet sein, der zur Oxidation von Stickstoffmonoxid zu Stickstoffdioxid dient.

In einer bevorzugten Ausgestaltung der Abgasanlage bilden die beiden Wabenkörper des SCR-Katalysators und des erfindungsgemäßen, als Ammoniak-Sperrkatalysator eingesetzten Katalysators eine Einheit mit einem vorderen und einem hinteren Teil. Der die untere Schicht des erfindungsgemäßen Ammoniak-Sperrkatalysators darstellende Oxidationskatalysator ist nur auf dem hinteren Teil des Wabenkörpers angeordnet. Die obere Schicht des erfindungsgemäßen Ammoniak-Sperrkatalysators ist als SCR-Katalysator ausgeführt. Sie kann über die gesamte Länge des Wabenkörpers abgeschieden sein, wobei sie die den Oxidationskatalysator enthaltende Beschichtung überdeckt.

In einer anderen Ausgestaltung der erfindungsgemäßen Abgasanlage kann der SCR-Katalysator in Form eines Wabenkörpers ausgeführt sein, der vollständig aus dem SCR-aktiven Material besteht (sog. Vollextrudat-SCR-Katalysator). Der erfindungsgemäße Ammoniak-Sperrkatalysator wird dann auf den hinteren Teil dieses Vollextrudat-Katalysators beschichtet, so daß der hintere Teil des SCR-Katalysators als Tragkörper für den Ammoniak-Sperrkatalysator dient.

Die Erfindung wird im folgenden anhand von Vergleichsbeispielen und Beispielen und den Figuren 1 bis 7 näher erläutert.

**Figur 1:** Funktionsprinzip des erfindungsgemäßen Katalysator zur Entfernung von Stickstoff-haltigen Schadgasen aus dem Abgas von Dieselmotoren enthaltend einen Wabenkörper und mindestens zwei übereinanderliegende, katalytisch aktive Schichten.

**Figur 2:** Verbesserung des Stickoxid-Umsatzes eines herkömmlichen SCR-Katalysators durch Erhöhung des Alpha-Wertes

**Figur 3:** Konzentrationen der bei der Oxidation von Ammoniak entstehenden Stickstoffverbindungen an einem Abgasreinigungssystem bestehend aus herkömmlichem SCR-Katalysator und unselektivem Ammoniak-Oxidationskatalysator in Abhängigkeit von der Temperatur

**Figur 4:** Effektivität der Ammoniak-Oxidation an Katalysatoren (#2 und #3) im Vergleich zu einem Referenz-Oxidationskatalysator (#1)

**Figur 5:** Temperaturabhängigkeit der Selektivität der Ammoniak-Oxidation zu $N_2$ erfindungsgemäßer bzw. nicht erfindungsgemäßer Katalysatoren (#2 und #3) im Vergleich zu einem Referenz-Oxidationskatalysator (#1)

**Figur 6:** Stickoxid-Umsatz und $NH_3$-Schlupf eines erfindungsgemäßen Katalysators (#5) und eines herkömmlichen SCR-Katalysator enthaltend mit Eisen ausgetauschten Zeolithen (#4), nach hydrothermaler Alterung bei 650°C.

**Figur 7:** $NH_3$-Desorption, gemessen an einem bei 200°C mit einer Ausgangskonzentration von 450 ppm $NH_3$ beladenen erfindungsgemäßen Katalysator (#2) und einem entsprechend vorbehandelten Katalysator gemäß EP 0 773 057 A1 (#6)

**Vergleichsbeispiel 1** :

In diesem Vergleichsbeispiel wurde die Verbesserung des Stickoxid-Umsatzes an einem herkömmlichen SCR-Katalysator durch Erhöhung des Molverhältnisses Alpha untersucht. Dabei wurde die zur Erhöhung des Alpha-Wertes notwendige Erhöhung der Ammoniak-Konzentration durch Überdosierung von Harnstoff vorgenommen. Der SCR-Katalysator enthielt auf einem keramischen Wabenkörper eine Beschichtung aus mit Eisen ausgetauschten Zeolithen. Das Volumen des Wabenkörpers betrug 12,5 1. Er besaß 62 Zellen/cm$^2$ bei einer Dicke der Zellwände von 0,17 mm.

Die Messung des Stickoxidumsatzes wurde an einem Motorprüfstand mit einem 6,4 1, 6-Zylinder Euro3-Motor vorgenommen. Mittels stationärer Motorpunkte wurden 6 verschiedene Abgastemperaturen nacheinander angefahren (450 °C, 400 °C, 350 °C, 300°C, 250°C, 200°C). An jedem konstanten Motorpunkt wurde stufenweise die Harnstoffdosierung erhöht und damit das Molverhältnis $\alpha$ variiert. Sobald die Gaskonzentrationen am Katalysatorausgang stabil waren, wurden der Stickoxid-Umsatz und die Ammoniak-Konzentration nach Katalysator aufgezeichnet. Als Beispiel zeigt Figur 2 das Ergebnis für eine Abgastemperatur vor Katalysator von 250°C.

Unter der Annahme, daß der Ammoniak-Schlupf nicht oberhalb von 10 ppm liegen sollte, ist in dem gezeigten Beispiel ein Stickoxidumsatz von etwa 45 % zu erreichen. Die Umsatzkurve deutet aber an, daß bei einem höheren Alpha-Wert ein Stickoxidumsatz von bis zu 57 % erreichbar wäre. Bei dem untersuchten System (nur herkömmlicher SCR-Katalysator) ist dies mit einem erheblichen Ammoniak-Schlupf (225 ppm) verbunden. Zur Minimierung der Ammoniak-Durchbrüche sollte entweder ein erfindungsgemäßer Katalysator als SCR-Katalysator anstelle des herkömmlichen SCR-Katalysators eingesetzt werden, oder eine Ergänzung des Systems durch einen geeigneten Ammoniak-Sperrkatalysators vorgenommen werden.

## Vergleichsbeispiel 2:

In diesem Beispiel wurden zwei hintereinander geschaltete Katalysatoren in einer Modellgasanlage untersucht. Die beiden Katalysatoren hatten folgende Zusammensetzung und waren als Beschichtung auf keramischen Wabenkörpern mit einer Zelldichte von 62 cm$^{-2}$ aufgebracht:

| | |
|---|---|
| 1. Katalysator: | Herkömmlicher SCR-Katalysator auf Basis von $V_2O_5/TiO_2$; Abmessung des Wabenkörpers: 25,4 mm Durchmesser, 76,2 mm Länge |
| 2. Katalysator: | Herkömmlicher Ammoniak-Sperrkatalysator bestehend aus 0,353 g/l Pt (=10 g/ft$^3$ Pt) und einem überwiegend Titandioxid enthaltenden Mischoxid; Abmessung des Wabenkörpers: 25,4 mm Durchmesser, 25,4 mm Länge |

Nacheinander wurden neun verschiedene stationäre Temperaturpunkte an der Modellgasanlage eingestellt. Die am Systemausgang erhaltenen Konzentrationen der Stickstoffkomponenten $NH_3$, $N_2O$, NO und $NO_2$ wurden in Abhängigkeit von der Temperatur unter Verwendung eines FTIR-Spektrometers gemessen. Das Modellgas wies folgende Zusammensetzung auf:

| Gaskomponente | Konzentration | |
|---|---|---|
| Stickoxide $NO_x$ | 0 | vppm |
| Ammoniak | 450 | vppm |
| Sauerstoff | 5 | Vol.-% |
| Wasser | 1,3 | Vol.-%. |
| Stickstoff | Rest | |
| Raumgeschwindigkeit über das Katalysatorgesamtsystem: | 30.000 | h$^{-1}$ |
| Raumgeschwindigkeit über den Ammoniak-Sperrkatalysator: | 120.000 | h$^{-1}$ |
| Gastemperatur (Eingang) | 550; 500; 400; 350; 300; 250; 200; 175; 150 | |

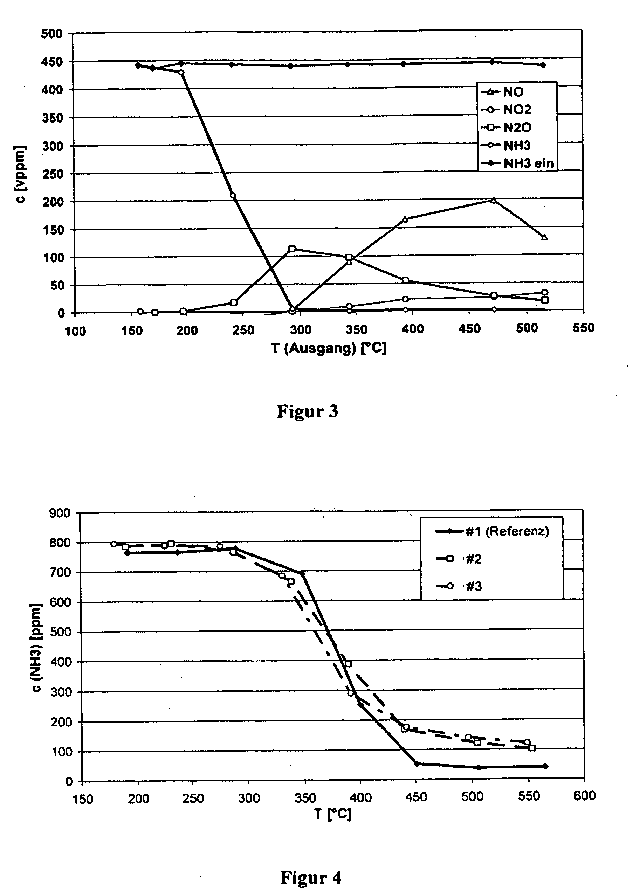

Die Konzentrationen der gemessenen Stickstoffkomponenten in Abhängigkeit von der Temperatur sind in Figur 3 grafisch dargestellt. Bei Temperaturen > 200 °C wird Ammoniak wirksam aus dem Abgasgemisch entfernt. Für höhere Temperaturen (T ≥ 300 °C) ist jedoch die Entstehung unerwünschter Nebenprodukte zu beobachten. Dabei entstehen mit steigender Temperatur zunehmend Stickstoffkomponenten mit höherem Oxidationszustand, von +1 ($N_2O$) über +II (NO) auf +IV ($NO_2$).

## Beispiel 1

Die im Vergleichsbeispiel 2 gezeigte Überoxidation zu Stickoxiden kann durch Einsatz eines erfindungsgemäßen Katalysators als Ammoniak-Sperrkatalysators bei gleichbleibender Oxidationskraft stark eingeschränkt werden. Nachstehende Tabelle zeigt die erfindungsgemäßen Formulierungen, die beispielhaft als Ammoniak-Sperrkatalysatoren getestet wurden.

| Katalysator | Beschreibung | Edelmetall-Gehalt |
|---|---|---|
| #1 | Referenz:<br>Unselektiver $NH_3$-Oxidationskatalysator, bestehend aus Platin auf einem überwiegend Alumi-niumoxid enthaltenden Mischoxid | 0,353 g/l |

(fortgesetzt)

| Katalysator | Beschreibung | Edelmetall-Gehalt |
|---|---|---|
| #2 | **Obere Schicht (1):** SCR-Katalysator basierend auf einem Eisen ausgetauschten Zeolithen mit einer NH$_3$-Speicherkapazität von 58 ml/g Katalysatormaterial<br>**Untere Schicht (2):** Unselektiver NH$_3$-Oxidationskatalysator wie #1 | 0,353 g/l |
| #3 | **Obere Schicht (1):** SCR-Katalysator basierend auf einem Eisen ausgetauschten Zeolithen mit Zusatz einer Barium-basierten Stickoxid-Speicher-komponente; die NH$_3$-Speicherkapazität der Schicht beträgt 29 ml/g Katalysator-material<br>**Untere Schicht (2):** Unselektiver NH$_3$-Oxidationskatalysator wie # 1 | 0,353 g/l |

NH$_3$ Umsatzaktivität und Selektivität zu Stickstoff wurden an der Modellgasanlage mit folgender Gaszusammensetzung getestet:

| Gaskomponente | Konzentration | |
|---|---|---|
| Stickoxide NO$_x$ | 0 | vppm |
| Ammoniak | 800 | vppm |
| Propen C$_3$H$_6$ | 40 | vppm |
| CO$_2$ | 8 | Vol% |
| Sauerstoff | 5 | Vol.-% |
| Wasser | 1,3 | Vol.-%. |
| Stickstoff | Rest | |
| Raumgeschwindigkeit | 320.000 | h$^{-1}$ |
| Gastemperatur | 550; 500; 450; 400; 350; 300; 250; 200 | |

Gegenüber dem Vergleichsbeispiel 2 wurden höhere Raumgeschwindigkeiten gewählt. Dies entspricht der Anforderung, das Volumen des Ammoniak-Sperrkatalysators möglichst gering zu halten. Die gewählten Ammoniak-Konzentrationen sind höher als in der praktischen Anwendung üblich und sollen in Verbindung mit dem geringeren Edelmetallgehalt eine bessere Differenzierbarkeit der Ergebnisse gewährleisten.

Figur 4 zeigt die Effektivität der Ammoniak-Oxidation: Der Verlauf der Ammoniak-Konzentration nach Katalysator als Funktion der Temperatur zeigt deutlich, daß die Ammoniak-Light-Off-Temperaturen T$_{50}$(NH$_3$) für die beiden Katalysatoren #2 und #3 in demselben Bereich (370°C bis 390°C) liegen, wie die Ammoniak-Light-Off-Temperaturen des unselektiven Referenz-NH$_3$-Oxidationskatalysators (ca. 380°C). Die Oxidationsaktivität aller getesteten Muster ist gleichwertig. Das NH$_3$-Light-Off-Verhalten wird trotz hoher Raumgeschwindigkeiten nicht durch die obere Schicht beeinflußt. Die beobachtete NH$_3$-Restkonzentration von ca. 100 ppm bei 550°C ist auf eine Diffusionslimitierung infolge der in diesem Experiment gewählten sehr hohen Katalysatorbelastung zurückzuführen.

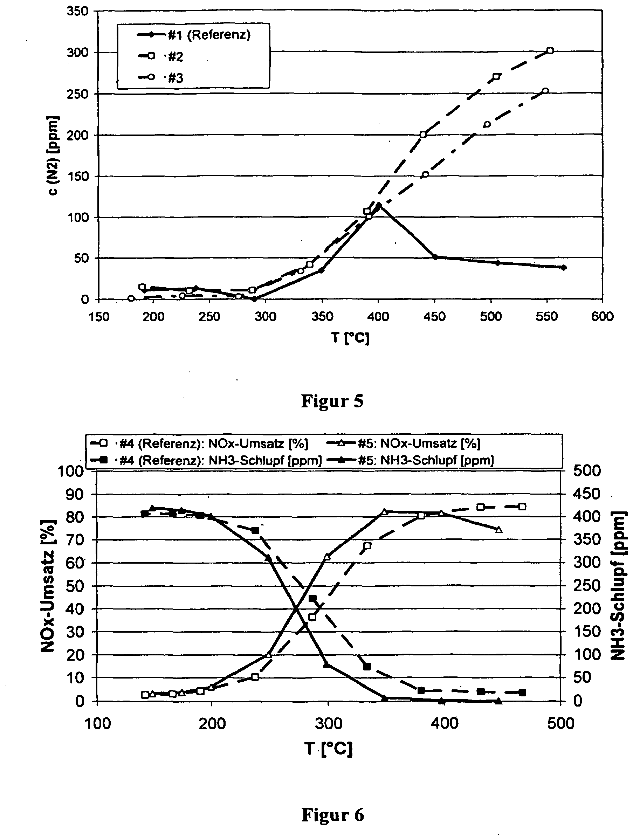

Die Selektivität zu N$_2$ ergibt sich rechnerisch aus der Differenz aller gemessenen Stickstoffkomponenten zu der dosierten Menge Ammoniak. Sie ist in Abhängigkeit von der Temperatur in Figur 5 dargestellt.

Übersteigt die Temperatur 400 °C, werden am Referenzkatalysator Stickoxide als Nebenprodukte gebildet. Die N$_2$-Bildung ist dadurch mit steigenden Temperaturen rückläufig. Im Gegensatz dazu zeigen alle erfindungsgemäßen Zweischicht-Katalysatoren (#2, #3) eine deutlich verbesserte Selektivität zu N$_2$.

## Beispiel 2

Der im Vergleichsbeispiel 1 gezeigte Ammoniak-Schlupf kann durch den Einsatz eines erfindungsgemäßen Katalysators als SCR-Katalysator vermindert werden. Der Vergleich von NO$_x$-Umsatz und Ammoniak-Durchbruchskonzentration eines herkömmlichen, mit Eisen ausgetauschten Zeolithen enthaltenden SCR-Katalysators und eines erfindungsgemäßen Katalysator belegt dies. Folgende Katalysatoren wurden untersucht:

#4: Herkömmlicher SCR-Katalysator auf Basis von mit Eisen ausgetauschtem Zeolithen, wie in Vergleichsbeispiel 1; Abmessung des Wabenkörpers: 25,4 mm Durchmesser, 76,2 mm Länge

#5: Erfindungsgemäßer Katalysator;

untere Schicht enthaltend 0,0353 g/l Pd (=1 g/ft$^3$ Pd) geträgert auf Zirkonoxid und Aluminiumoxid;
obere Schicht: SCR-Katalysator basierend auf einem Eisen ausgetauschten Zeolithen mit einer NH$_3$-Speicher-kapazität von 58 ml/g Katalysatormaterial;
Abmessung des Wabenkörpers: 25,4 mm Durchmesser, 76,2 mm Länge

Beide Katalysatoren wurden zunächst für die Dauer von 48 Stunden einer synthetischen Hydrothermalalterung im Ofen bei 650°C in einer Atmosphäre aus 10 Vol.-% Sauerstoff und 10 Vol.-% Wasserdampf in Stickstoff unterzogen. Anschließend wurden SCR-Umsatzaktivität und Ammoniak-Konzentration nach Katalysator an einer Modellgasanlage unter folgenden Bedingungen getestet:

| Gaskomponente | Konzentration |
|---|---|
| Stickoxid NO: | 500 vppm |
| Ammoniak NH$_3$: | 450 vppm |
| Sauerstoff O$_2$: | 5 Vol.% |
| Wasser H$_2$O: | 1,3 Vol.-%. |
| Stickstoff N$_2$: | Rest |
| Raumgeschwindigkeit | 30.000 h$^{-1}$ |
| Gastemperatur [°C] | 450; 400; 350; 300; 250; 200, 175, 150 |

Die Ergebnisse der Untersuchung sind in Figur 6 dargestellt. Es wird deutlich, daß der erfindungsgemäße Katalysator #5 gegenüber dem herkömmlichen, Eisen-Zeolithbasierten SCR-Katalysator #4 nach Hydrothermalalterung im Temperaturbereich 200 - 350°C sowohl einen verbesserten Stickoxid-Umsatz als auch einen verringerten NH$_3$-Schlupf zeigt.

## Vergleichsbeispiel 3

Es wurde ein Katalysator gemäß EP 0 773 057 A1 hergestellt. Dazu wurden auf einen keramischen Wabenkörper mit 62 Zellen/cm$^2$ und einer Zellwanddicke von 0,17 mm zunächst 35 g/l einer Beschichtung bestehend aus 1 Gew.-% Platin und einem mit Kupfer ausgetauschten ZSM-5-Zeolithen (SiO$_2$:Al$_2$O$_3$-Verhältnis von 45) enthaltend 2,4 Gew.-% Kupfer aufgebracht. Nach Trocknung und Kalzination der unteren Schicht wurde eine obere Schicht bestehend aus 160 g/l des mit Kupfer ausgetauschten ZSM-5-Zeolithen (SiO$_2$:Al$_2$O$_3$-Verhältnis von 45) enthaltend 2,4 Gew.-% Kupfer aufgebracht. Es folgten erneut Trocknung und Kalzination. Der für die Testung fertiggestellte Wabenkörper hatte einen Durchmesser von 25,4 mm und eine Länge von 76,2 mm und enthielt insgesamt 0,353 g/l Platin, bezogen auf das Volumen des Wabenkörpers.
Der so erhaltene Katalysator #6 wurde im Vergleich zu dem erfindungsgemäßen Katalysator #2 aus Beispiel 1 (obere Schicht: 160 g/l) in einem Ammoniak-Desorptionsexperiment in der Modellgasanlage untersucht. Hierzu wurden die Katalysatoren in frisch hergestelltem Zustand zunächst bei 200°C über einen Zeitraum von etwa einer Stunde einer 450 ppm Ammoniak enthaltenden Gasmischung bei einer Raumgeschwindigkeit von 30.000 1/h ausgesetzt. Die Gasmischung enthielt außerdem 5 Vol.-% Sauerstoff und 1,3 Vol.% Wasserdampf in Stickstoff. Am Ende der Beladungszeit wurde ein vollständiger Durchbruch der dosierten Ammoniakmenge durch den Katalysator beobachtet. Die Ammoniak-Zufuhr wurde abgestellt.
Die Katalysatoren wurden nach einer Haltezeit von zwei Minuten bei konstanter Temperatur mit einer Heizrate von 1° pro Sekunde aufgeheizt. Die desorbierende Menge Ammoniak wurde mit Hilfe eines FTIR-Spektrometers gemessen.

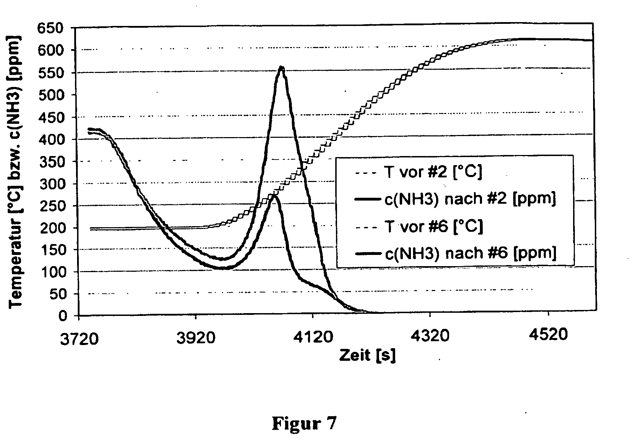

Figur 7 zeigt die erhaltenen Ergebnisse für den erfindungsgemäßen Katalysator #2 und den Vergleichskatalysator gemäß EP 0 773 057 A1, #6. Neben den nach Katalysator gemessenen Ammoniak-Konzentrationen sind die vor Katalysator gemessenen Temperaturen über den zeitlichen Verlauf des Experiments aufgetragen. Dargestellt ist nur die Desorptionsphase.
Bei beiden Katalysatoren beginnt die Ammoniak-Desorption bei ca. 210°C. Es ist deutlich zu erkennen, daß aus dem Vergleichskatalysator #6 erheblich mehr Ammoniak desorbiert als aus dem erfindungsgemäßen Katalysator #2. Diese "Überbeladung" des Katalysators #6 mit Ammoniak führt, wie beschrieben, bei Temperaturschwankungen im dynamischen Betrieb zu unkontrollierten Ammoniak-Desorptionen und somit zu unerwünschten Ammoniak-Durchbrüchen während des Fahrbetriebes.

**Patentansprüche**

1. Katalysator zur Entfernung von Stickstoff-haltigen Schadgasen aus dem Abgas von Dieselmotoren enthaltend einen Wabenkörper und eine aus zwei übereinander liegenden katalytisch aktiven Schichten bestehende Beschichtung, wobei die direkt auf den Wabenkörper aufgebrachte, untere Schicht einen Oxidationskatalysator enthält, der frei ist von Ammoniak-Speichermaterialien und besteht aus Platin oder Palladium oder Mischungen von Platin und Palladium auf einem Trägermaterial ausgewählt aus der Gruppe bestehend aus aktivem Aluminiumoxid, Zirkonoxid, Titanoxid, Siliziumdioxid und Mischungen oder Mischoxiden davon,
und wobei die darauf aufgebrachte, obere Schicht besteht aus einem oder mehreren mit Eisen ausgetauschten Zeolithen, die sich durch gute SCR-Aktivität auszeichnen, als Ammoniak-Speichermaterial, welches über eine Ammoniak-Speicherkapazität von mindestens 20 Milliliter Ammoniak pro Gramm Katalysatormaterial verfügt.

2. Verfahren zur Entfernung von Stickoxiden aus dem Abgas von Dieselmotoren, **dadurch gekennzeichnet, dass** das Abgas bei Temperaturen im Bereich 150 bis 400°C über einen Katalysator nach Anspruch 1 als SCR-Katalysator mit einem verringerten Ammoniak-Schlupf geleitet wird.

3. Verfahren nach Anspruch 2, **dadurch gekennzeichnet, dass** der Katalysator am Ende des Abgasstranges in einem Unterbodenkonverter angeordnet ist.

4. Verfahren nach Anspruch 3, **dadurch gekennzeichnet, dass** vor dem Katalysator Ammoniak oder eine zu Ammoniak zersetzliche Verbindung in den Abgasstrang eindosiert wird.

5. Verfahren zur Entfernung von Stickoxiden aus dem Abgas von Dieselmotoren, **dadurch gekennzeichnet, dass** der Katalysator nach Anspruch 1 als Ammoniak-Sperrkatalysator in Kombination mit einem SCR-Katalysator eingesetzt wird, welcher einen mit Kupfer oder Eisen ausgetauschten Zeolithen oder einen mit Kupfer und Eisen ausgetauschten Zeolithen oder Mischungen davon, oder ein Oxid ausgewählt aus Vanadiumoxid, Wolframoxid und Molybdänoxid auf einem Trägermaterial aus Titanoxid enthält.

6. Verfahren nach Anspruch 5, **dadurch gekennzeichnet, dass** der SCR-Katalysator und der Ammoniak-Sperrkatalysator jeweils in Form einer Beschichtung auf einem inerten Wabenkörper vorliegen, wobei beide Wabenkörper aus einem inerten Material bestehen.

7. Verfahren nach Anspruch 6, **dadurch gekennzeichnet, dass** die beiden Wabenkörper in zwei hintereinander liegenden Konvertern oder in einem gemeinsamen Konverter vorliegen, wobei der Ammoniak-Sperrkatalysator abströmseitig zum SCR-Katalysator angeordnet ist

8. Verfahren nach Anspruch 6, **dadurch gekennzeichnet, dass** die beiden Wabenkörper des SCR-Katalysators und des als Ammoniak-Sperrkatalysator eingesetzten Katalysators nach Anspruch 1 eine Einheit mit einem vorderen Teil und einem hinteren Teil bilden.

9. Verfahren nach Anspruch 8, **dadurch gekennzeichnet, dass** der die untere Schicht des Ammoniak-Sperrkatalysators darstellende Oxidationskatalysator nur auf dem hinteren Teil des Wabenkörpers angeordnet ist, wobei die obere Schicht des Ammoniak-Sperrkatalysators als SCR-Katalysator ausgeführt und über die gesamte Länge des Wabenkörpers abgeschieden ist und die den Oxidationskatalysator enthaltende Beschichtung überdeckt.

10. Verfahren nach Anspruch 5, **dadurch gekennzeichnet, dass** der SCR-Katalysator in Form eines Wabenkörpers ausgeführt ist, der vollständig aus dem SCR-aktiven Material besteht (sog. Vollextrudat-SCR-Katalysator), wobei der Ammoniak-Sperrkatalysator auf den hinteren Teil des Wabenkörpers beschichtet ist, so dass der hintere Teil des SCR-Katalysators als Tragkörper für den Ammoniak-Sperrkatalysator dient.

## Claims

1.  Catalyst for removing nitrogen-containing pollutant gases from the exhaust gas of diesel engines, which contains a honeycomb body and a coating composed of two superposed catalytically active layers, wherein the lower layer applied directly to the honeycomb body contains an oxidation catalyst which is free of ammonia storage materials and consists of platinum or palladium or mixtures of platinum and palladium on a support material selected from the group consisting of active aluminium oxide, zirconium oxide, titanium oxide, silicon dioxide and mixtures or mixed oxides thereof
    and the upper layer applied thereto consists of one or more iron-exchanged zeolites which have good SCR activity as ammonia storage material which has an ammonia storage capacity of at least 20 millilitres of ammonia per gram of catalyst material.

2.  Process for removing nitrogen oxides from the exhaust gas of diesel engines, **characterized in that** the exhaust gas is passed at temperatures in the range from 150 to 400°C over a catalyst according to Claim 1 as SCR catalyst having a reduced ammonia breakthrough.

3.  Process according to Claim 2, **characterized in that** the catalyst is arranged at the end of the exhaust gas train in an underfloor converter.

4.  Process according to Claim 3, **characterized in that** ammonia or a compound which can be decomposed to form ammonia is introduced into the exhaust gas train upstream of the catalyst.

5.  Process for removing nitrogen oxides from the exhaust gas of diesel engines, **characterized in that** the catalyst according to Claim 1 is used as ammonia barrier catalyst in combination with an SCR catalyst which contains a zeolite which has been exchanged with copper or iron or a zeolite which has been exchanged with copper and iron or mixtures thereof or an oxide selected from among vanadium oxide, tungsten oxide and molybdenum oxide on a support material comprising titanium oxide.

6.  Process according to Claim 5, **characterized in that** the SCR catalyst and the ammonia barrier catalyst are each present in the form of a coating on an inert honeycomb body, where both honeycomb bodies consist of an inert material.

7.  Process according to Claim 6, **characterized in that** the two honeycomb bodies are present in two converters arranged in series or in a joint converter, where the ammonia barrier catalyst is arranged downstream of the SCR catalyst.

8.  Process according to Claim 6, **characterized in that** the two honeycomb bodies of the SCR catalyst and the catalyst according to Claim 1 used as ammonia barrier catalyst form one unit having a front part and a back part.

9.  Process according to Claim 8, **characterized in that** the oxidation catalyst forming the lower layer of the ammonia barrier catalyst is arranged only on the back part of the honeycomb body while the upper layer of the ammonia barrier catalyst is configured as SCR catalyst and is deposited over the entire length of the honeycomb body and covers the coating containing the oxidation catalyst.

10. Process according to Claim 5, **characterized in that** the SCR catalyst is configured as a honeycomb body which consists entirely of the SCR-active material (known as solid extrudate SCR catalyst), where the back part of the honeycomb body is coated with the ammonia barrier catalyst so that the back part of the SCR catalyst serves as support body for the ammonia barrier catalyst.

## Revendications

1.  Catalyseur destiné à éliminer des gaz polluant contenant de l'azote dans des gaz d'échappement de moteurs diesel, contenant un corps en nid d'abeilles et un revêtement composé de deux couches superposées à activité catalytique, dans lequel la couche inférieure déposée directement sur le corps en nid d'abeilles contient un catalyseur d'oxydation, qui est exempt de matériaux d'accumulation de l'ammoniac et qui se compose de platine ou de palladium ou de mélanges de platine et de palladium sur un matériau de support choisi dans le groupe composé d'oxyde d'aluminium, d'oxyde de zirconium, d'oxyde de titane, de dioxyde de silicium actif et de mélanges ou d'oxydes mixtes de ceux-ci, et dans lequel la couche supérieure déposée sur celle-ci se compose d'une ou de plusieurs zéolites échangées avec du fer, qui se caractérisent par une bonne activité SCR, comme matériau d'accumulation de l'ammoniac, qui dispose d'une capacité d'accumulation de l'ammoniac d'au moins 20 millilitres d'ammoniac par gramme de matériau catalyseur.

2. Catalyseur destiné à éliminer des oxydes d'azote dans des gaz d'échappement de moteurs diesel, **caractérisé en ce que** les gaz d'échappement sont conduits à des températures dans la plage de 150 à 400°C sur un catalyseur selon la revendication 1 comme catalyseur SCR avec un glissement d'ammoniac réduit.

3. Procédé selon la revendication 2, **caractérisé en ce que** le catalyseur est disposé à l'extrémité du circuit de gaz d'échappement dans un convertisseur de châssis.

4. Procédé selon la revendication 3, **caractérisé en ce que** l'on introduit de l'ammoniac ou un composé se décomposant en ammoniac dans le circuit de gaz d'échappement avant le catalyseur.

5. Procédé destiné à éliminer des oxydes d'azote dans des gaz d'échappement de moteurs diesel, **caractérisé en ce que** l'on utilise le catalyseur selon la revendication 1 comme catalyseur de blocage d'ammoniac en combinaison avec un catalyseur SCR, qui contient une zéolite échangée avec du cuivre ou du fer ou une zéolite échangée avec du cuivre et du fer ou des mélanges de celles-ci, ou un oxyde choisi parmi l'oxyde de vanadium, l'oxyde de tungstène et l'oxyde de molybdène sur un matériau de support.

6. Procédé selon la revendication 5, **caractérisé en ce que** le catalyseur SCR et le catalyseur de blocage d'ammoniac se trouvent respectivement sous la forme d'un revêtement sur un corps en nid d'abeilles inerte, dans lequel les deux corps en nid d'abeilles se composent d'un matériau inerte.

7. Procédé selon la revendication 6, **caractérisé en ce que** les deux corps en nid d'abeilles se trouvent dans deux convertisseurs situés l'un derrière l'autre ou dans un convertisseur commun, dans lequel le catalyseur de blocage d'ammoniac est disposé en aval par rapport au catalyseur SCR.

8. Procédé selon la revendication 6, **caractérisé en ce que** les deux corps en nid d'abeilles du catalyseur SCR et du catalyseur selon la revendication 1 utilisé comme catalyseur de blocage d'ammoniac forment une unité avec une partie antérieure et une partie postérieure.

9. Procédé selon la revendication 8, **caractérisé en ce que** le catalyseur d'oxydation représentant la couche inférieure du catalyseur de blocage d'ammoniac n'est disposé que sur la partie postérieure du corps en nid d'abeilles, dans lequel la couche supérieure du catalyseur de blocage d'ammoniac est réalisée comme catalyseur SCR et est déposée sur toute la longueur du corps en nid d'abeilles et recouvre le revêtement contenant le catalyseur d'oxydation.

10. Procédé selon la revendication 5, **caractérisé en ce que** le catalyseur SCR est réalisé sous la forme d'un nid d'abeilles, qui se compose entièrement du matériau à activité SCR (appelé catalyseur SCR en extrudat complet), dans lequel le catalyseur de blocage d'ammoniac est déposé sur la partie postérieure du corps en nid d'abeilles, de telle manière que la partie postérieure du catalyseur SCR serve de corps de support pour le catalyseur de blocage d'ammoniac.

**Figur 1**

**Figur 2**

**Figur 3**

**Figur 4**

**Figur 5**

**Figur 6**

**Figur 7**

**EP 2 029 260 B2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6345496 B1
- WO 2005064130 A
- WO 2005099873 A1
- DE 3929297 C2
- US 5120695 A
- EP 1399246 B1

- JP 2005238199 A
- EP 0559021 A
- JP 2005238195 A
- US 20040206069 A
- WO 02100520 A
- EP 0773057 A1